(19) **Europäisches Patentamt**

**European Patent Office**

**Office européen des brevets**

(11) **EP 1 722 583 A1**

(12) **EUROPÄISCHE PATENTANMELDUNG**

(43) Veröffentlichungstag:
   **15.11.2006 Patentblatt 2006/46**

(51) Int Cl.:
   ***H04Q 7/36*** (2006.01)

(21) Anmeldenummer: **05010259.9**

(22) Anmeldetag: **11.05.2005**

(84) Benannte Vertragsstaaten:
   **AT BE BG CH CY CZ DE DK EE ES FI FR GB GR HU IE IS IT LI LT LU MC NL PL PT RO SE SI SK TR**
   Benannte Erstreckungsstaaten:
   **AL BA HR LV MK YU**

(71) Anmelder: **SIEMENS AKTIENGESELLSCHAFT**
   **80333 München (DE)**

(72) Erfinder:
   • **Hu, Honglin**
     **c/o S.J Zhang, 80937 München (DE)**
   • **Schulz, Egon, Dr.**
     **80993 München (DE)**
   • **Weckerle, Martin, Dr.**
     **89077 Ulm (DE)**

(54) **Beam-Hopping in einem Funkkommunikationssystem**

(57)   Die Erfindung betrifft ein Verfahren zur Kommunikation in einem Funkkommunikationssystem, welches zumindest eine Basisstation (BS) und Teilnehmerstationen (MS) umfasst. Die Basisstation (BS) verwendet zur Nachrichtenversendung an Teilnehmerstationen (MS) nacheinander verschiedene Abstrahlrichtungen (BEAM 1, BEAM 2, BEAM 3, BEAM 4). Erfindungsgemäß versendet die Basisstation (BS) Informationen über die Reihenfolge der Verwendung der Abstrahlrichtungen (BEAM 1, BEAM 2, BEAM 3, BEAM 4) an Teilnehmerstationen (MS). Weiterhin betrifft die Erfindung eine Basisstation (BS) und eine Teilnehmerstation (MS) zur Durchführung des Verfahrens.

FIG 1

EP 1 722 583 A1

**Beschreibung**

Die Erfindung betrifft ein Verfahren zur Kommunikation in einem Funkkommunikationssystem, bei dem die Basisstation zur Nachrichtenversendung an Teilnehmerstationen nacheinander verschiedene Abstrahlrichtungen verwendet. Weiterhin betrifft die Erfindung eine Basisstation und eine Teilnehmerstation zur Durchführung des Verfahrens.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen oder netzseitige Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/ Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Bei Verwendung von Raumbereichs-Vielfachzugriffsverfahren können von einer Basisstation Informationen gerichtet in bestimmte Abstrahlrichtungen zu einer Teilnehmerstation gesendet werden. Hierbei ist es möglich, dass der Strahl der Bewegung der Teilnehmerstation folgt, oder dass diskrete Abstrahlrichtungen verwendet werden, zwischen welchen bei Bewegung der Teilnehmerstation umgeschaltet wird. Alternativ wird bei unter der Bezeichnung Beam Hopping bekannten Verfahren von der Basisstation nach dem Zufallsprinzip eine Abstrahlrichtung ausgewählt und Nachrichten an Teilnehmerstationen im Gebiet der jeweiligen Abstrahlrichtung gesendet.

Der Erfindung liegt die Aufgabe zugrunde, ein Verfahren zur Kommunikation per Funk aufzuzeigen, bei welchem eine Basisstation verschiedene Abstrahlrichtungen zur Versendung von Nachrichten einsetzt. Weiterhin sollen eine Basisstation und eine Teilnehmerstation zur Durchführung des Verfahrens vorgestellt werden.

Diese Aufgabe wird durch ein Verfahren mit den Merkmalen des Anspruchs 1 und durch Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zur Kommunikation in einem Funkkommunikationssystem verwendet die Basisstation zur Nachrichtenversendung an Teilnehmerstationen nacheinander verschiedene Abstrahlrichtungen. Erfindungsgemäß versendet die Basisstation Informationen über die Reihenfolge der Verwendung der Abstrahlrichtungen an Teilnehmerstationen.

Bei der Basisstation kann es sich z.B. um eine netzseitige Funkstation eines UMTS, GSM, Wimax oder WLAN Systems handeln, bei den Teilnehmerstation z.B. um ortsfeste oder mobile Telefone oder Computer. Die Basisstation weist vorzugsweise eine Mehrzahl von Antennen auf, durch welche sie die Mehrzahl von Abstrahlrichtungen realisieren kann. Die Teilnehmerstationen können eine oder mehrere Antennen aufweisen.

Eine Abstrahlrichtung entspricht einem bestimmten Antennendiagramm. Es existiert eine Mehrzahl dieser Abstrahlrichtungen, welche die Basisstation nacheinander in einer bestimmten Reihenfolge verwendet. Vorzugsweise werden während der Zeitspanne, während welcher eine bestimmte Abstrahlrichtung verwendet wird, Informationen mit dieser Abstrahlrichtung an lediglich eine Teilnehmerstation gesendet, d.h. pro Abstrahlrichtung und Zeitdauer der Verwendung der Abstrahlrichtung wird genau eine Teilnehmerstation von der Basisstation versorgt. Durch Verwendung weiterer Separierungsverfahren, wie z.B. Kodes oder Funkfrequenzen, können während dieser Zeit Informationen mit dieser Abstrahlrichtung gleichzeitig an verschiedene Teilnehmerstationen gesendet werden. Wird von einer Abstrahlrichtung zu der gemäß der Reihenfolge nächsten Abstrahlrichtung gewechselt, ändert sich vorzugsweise auch die Teilnehmerstation oder Teilnehmerstationen, an welche die Basisstation Informationen sendet. Auf diese Weise können durch die aufeinander folgende Verwendung verschiedener Abstrahlrichtungen verschiedene Teilnehmerstationen von der Basisstation Informationen empfangen.

Die Versendung der Informationen über die Reihenfolge erfolgt vorzugsweise omnidirektional per Broadcast, d.h. bestimmt für alle Teilnehmerstationen, welche sich aktuell in dem Funkabdeckungsbereich der Basisstation befinden. Für die Versendung der Informationen über die Reihenfolge kann die aufeinander folgende Verwendung der verschiedenen Abstrahlrichtungen unterbrochen werden, so dass eine erste Abstrahlrichtung verwendet wird, dann die Informationen über die Reihenfolge omnidirektional ausgestrahlt werden, und danach eine zweite Abstrahlrichtung verwendet wird. Besonders vorteilhaft ist es, wenn die Informationen über die Reihenfolge periodisch gesendet werden, so dass die Teilnehmerstationen regelmäßig über die aktuell verwendete Reihenfolge, welche von Zeit zu Zeit geändert werden kann, informiert werden.

Die Informationen über die Reihenfolge können die Reihenfolge explizit angeben, d.h. erste Abstrahlrichtung, zweite Abstrahlrichtung, usw.; zusätzlich kann eine Angabe erfolgen, welche Abstrahlrichtung der Reihenfolge als nächstes verwendet wird, z.B. in der Form erste Abstrahlrichtung, zweite Abstrahlrichtung, dritte Abstrahlrichtung, starte mit zweite Abstrahlrichtung. Anstelle einer expliziten Angabe ist eine Bezugnahme auf eine den Teilnehmerstationen bekannte Reihenfolge möglich, indem z.B. darauf verwiesen wird, dass eine bestimmte den Teilnehmerstationen bekannte Reihenfolge aktuell zum Einsatz kommt, und/oder indem auf eine Abstrahlrichtung in einer den Teilnehmerstationen bekannten Reihenfolge, welche als nächstes verwendet wird, verwiesen wird.

In Weiterbildung der Erfindung versendet die Basisstation ein Pilotsignal zur teilnehmerseitigen Kanalschätzung omnidirektional. Das Pilotsignal wird vorzugsweise per Broadcast, d.h. bestimmt für alle Teilnehmerstationen, welche sich aktuell in dem Funkabdeckungsbereich der Basisstation befinden, gesendet. Für die Versendung des Pilotsignals kann die aufeinander folgende Verwendung der verschiedenen Abstrahlrichtungen unterbrochen werden, so dass eine erste Abstrahlrichtung verwendet wird, dann das Pilotsignal omnidirektional ausgestrahlt wird, und danach eine zweite Abstrahlrichtung verwendet wird. Besonders vorteilhaft ist es, wenn das Pilotsignal periodisch gesendet wird.

Einer vorteilhaften Ausgestaltung der Erfindung gemäß empfängt die Basisstation nach der Versendung des Pilotsignals Informationen von mindestens einer Teilnehmerstation über eine teilnehmerseitige Empfangsqualität betreffend eine Mehrzahl der Abstrahlrichtungen. Vorteilhafterweise empfängt die Basisstation von jeweils einer Teilnehmerstation Informationen betreffend jeweils eine Abstrahlrichtungen, so dass die Informationen betreffend eine Mehrzahl der Abstrahlrichtungen von einer Mehrzahl von Teilnehmerstationen stammen. Zusätzlich oder alternativ ist es auch möglich, dass eine oder mehrere Teilnehmerstationen Informationen betreffend eine Mehrzahl der Abstrahlrichtungen senden. Die Informationen über die Empfangsqualität betreffend eine Abstrahlrichtung stellen ein Maß dafür dar, wie gut die Teilnehmerstation, von welcher die Informationen stammen, Signale von der Basisstation empfängt, wenn die Basisstation die jeweilige Abstrahlrichtung verwendet.

Mit Vorzug werden die Informationen über die teilnehmerseitige Empfangsqualität aus einer teilnehmerseitigen Kanalschätzung unter Verwendung des omnidirektional versendeten Pilotsignals und aus Informationen über zumindest manche der Abstrahlrichtungen ermittelt. Die Ermittlung kann netz- oder teilnehmerseitig erfolgen. Die Informationen über eine Abstrahlrichtung geben vorzugsweise an, wie das der Abstrahlrichtung entsprechende Antennendiagramm ausgestaltet ist.

In Ausgestaltung der Erfindung weist die Basisstation aufgrund der empfangenen Informationen über die Empfangsqualität Funkressourcen einer Abstrahlrichtung an eine Teilnehmerstation zu. Diese Zuweisung kann z.B. direkt vor oder nach einer Versendung von Informationen über die aktuell von der Basisstation verwendete Reihenfolge der Abstrahlrichtungen gesendet werden. Die Zuweisung kann erfolgen, indem die Funkressource der Zeitspanne, während welcher die jeweilige Abstrahlrichtung verwendet wird, einer Teilnehmerstation zugewiesen wird. Es ist möglich, dass mehrere Abstrahlrichtungen zugewiesen werden, und zwar an jeweils eine unterschiedliche Teilnehmerstation. Zusätzlich oder alternativ ist es möglich, dass Funkressourcen einer Abstrahlrichtung, wie die Zeitspanne in Kombination z.B. mit Kodes und/oder Funkfrequenzen, an mehrere Teilnehmerstationen zugewiesen werden.

Einer Weiterbildung der Erfindung gemäß ändert die Basisstation aufgrund der empfangenen Informationen über die Empfangsqualität die Reihenfolge der Verwendung der Abstrahlrichtungen und versendet Informationen über die geänderte Reihenfolge. Die Versendung der Informationen über die geänderte Reihenfolge kann entsprechend der Versendung der Informationen über die zuvor verwendete Reihenfolge ausgestaltet sein. Vorzugsweise umfasst die Änderung der Reihenfolge ein Auslassen von zumindest einer Abstrahlrichtung. Auf diese Weise ist es beispielsweise möglich, dass zuerst vier Abstrahlrichtungen in einer bestimmten Reihenfolge verwendet werden, und im Anschluss drei der vier Abstrahlrichtungen in einer bestimmten Reihenfolge. Durch die Änderung der Reihenfolge ist es z.B. möglich, dass eine Abstrahlrichtung mehrmals nacheinander verwendet wird oder öfter als die anderen verwendeten Abstrahlrichtungen. Die Versendung von Informationen über die Änderung der Reihenfolge ist insbesondere dann vorteilhaft, wenn Informationen über die Reihenfolge periodisch versendet werden.

In Ausgestaltung der Erfindung verwendet eine weitere Basisstation zur Nachrichtenversendung an Teilnehmerstationen nacheinander verschiedene Abstrahlrichtungen, wobei die Reihenfolge der Verwendung der Abstrahlrichtungen der Basisstation und die Reihenfolge der Verwendung der Abstrahlrichtungen der weiteren Basisstation aufeinander abgestimmt werden. Die von der Basisstation und der weiteren Basisstation verwendeten Abstrahlrichtungen können von der jeweiligen Basisstation als Bezugspunkt aus gesehen gleich sein, wobei dies auch auf lediglich manche der Abstrahlrichtungen zutreffen kann. Durch die Abstimmung der beiden Reihenfolgen kann eine Anpassung der Reihenfolge einer Basisstation daraufhin erfolgen, dass die andere Basisstation ihre Reihenfolge geändert hat oder ändern wird.

Vorteilhaft ist es, wenn erste und zweite Informationen über eine teilnehmerseitige Empfangsqualität ermittelt werden, wobei die ersten Informationen aus einer Kanalschätzung einer Teilnehmerstation unter Verwendung des omnidirektional versendeten Pilotsignals der Basisstation und aus Informationen über zumindest manche der Abstrahlrichtungen der Basisstation ermittelt werden, und die zweiten Informationen aus einer Kanalschätzung der Teilnehmerstation unter Verwendung eines omnidirektional versendeten Pilotsignals der weiteren Basisstation und aus Informationen über zumindest manche der Abstrahlrichtungen der weiteren Basisstation ermittelt werden, und die ersten und die zweiten Informationen bei einer Zuweisung von Funkressourcen an die Teilnehmerstation berücksichtigt werden. Auf diese Weise können Interzell-Interferenzen bei der Zuweisung von Funkressourcen insbesondere an Teilnehmerstationen, welche sich in der Nähe der Grenzen der jeweiligen Funkzellen befinden, bei der Ressourcenvergabe einbezogen werden.

Einer vorteilhaften Ausgestaltung der Erfindung gemäß verwendet eine weitere Basisstation zur Nachrichtenversendung an Teilnehmerstationen nacheinander verschiedene Abstrahlrichtungen, und die Basisstation und die weitere Basisstation senden gleichzeitig die gleiche Nachricht an eine Teilnehmerstation unter Verwendung von jeweils einer Abstrahlrichtung. Die beiden Abstrahlrichtungen werden zur Erreichung einer hohen Empfangsqualität bei der Teilnehmerstation so gewählt, dass sie aufeinander zu zeigen.

Die erfindungsgemäße Basisstation weist Mittel auf zum Versenden von Nachrichten an Teilnehmerstationen unter Verwendung von verschiedenen Abstrahlrichtungen nacheinander, und Mittel zum Versenden von Informationen über die Reihenfolge der Verwendung der Abstrahlrichtungen an Teilnehmerstationen.

Die erfindungsgemäße Teilnehmerstation weist Mittel auf zum Empfangen und Verarbeiten von Informationen über die Reihenfolge der Verwendung der Abstrahlrichtungen von der Basisstation. Weiterhin kann sie aufweisen: Mittel zum Durchführen einer Kanalschätzung unter Verwendung eines von der Basisstation omnidirektional versendeten Pilotsignals, und Mittel zum Ermitteln von Informationen über eine teilnehmerseitige Empfangsqualität aus der Kanalschätzung und aus Informationen über zumindest manche der Abstrahlrichtungen.

Sowohl die erfindungsgemäße Basisstation als auch die erfindungsgemäße Teilnehmerstation eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:

Figur 1: einen Ausschnitt aus einem Funkkommunikationssystem,

Figur 2: einen erfindungsgemäßen Nachrichtenaustausch zwischen einer Teilnehmerstation und einer Basisstation,

Figur 3a: einen ersten mehrere Funkzellen umfassenden Ausschnitt aus einem Funkkommunikationssystem,

Figur 3b: einen zweiten mehrere Funkzellen umfassenden Ausschnitt aus einem Funkkommunikationssystem.

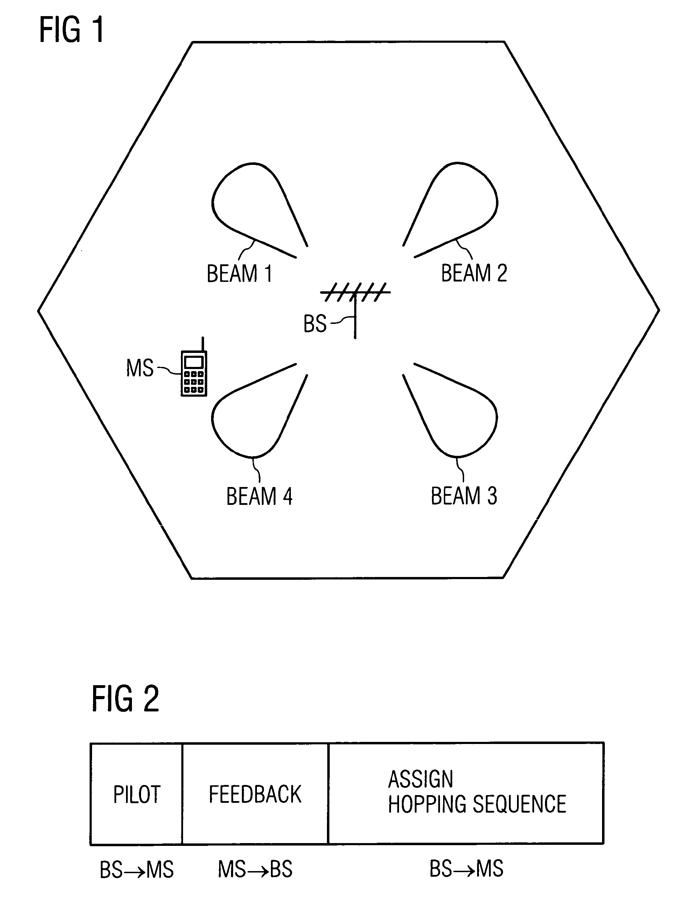

Der in Figur 1 dargestellte Ausschnitt aus einem Funkkommunikationssystem zeigt eine Funkzelle einer Basisstation BS, in welcher sich die Mobilstation MS befindet. Bei dem Funkkommunikationssystem kann es sich z.B. um ein zellulares System nach dem Standard UMTS oder GSM handeln. Die Basisstation BS weist eine Mehrzahl von Antennen auf, so dass sie Signale in eine Mehrzahl von Abstrahlrichtungen versenden kann. In Figur 1 sind schematisch die Strahlen BEAM 1, BEAM 2, BEAM 3 und BEAM 4 von vier Abstrahlrichtungen dargestellt. Vorteilhafterweise sind die von der Basisstation BS verwendeten Strahlen so ausgebildet, dass durch die Gesamtheit der Strahlen eine Funkabdeckung der gesamten Zelle möglich ist. Weist die Basisstation BS M Sendeantennen auf und werden J verschiedene Strahlen zur Versendung von Informationen an Teilnehmerstationen verwendet, so liegen J Strahlformungsvektoren

$$W_j = \left[ w_{j,1}, w_{j,2}, ..., w_{j,M} \right]^T$$ mit $j = 1...J$ vor. Die Bestandteile $w_{j,i}$ sind hierbei die Gewichte, mit welchen die einzelnen Antennen i zur Ausstrahlung eines Signals über den Strahl j angesteuert werden. In Bezug auf die Teilnehmerstationen des Funkkommunikationssystems wird davon ausgegangen, dass diese keine Mehrzahl von Antennen, sondern eine Antenne zum omnidirektionalen Empfang und Versendung von Signalen aufweisen.

Zur Versendung von Informationen an Teilnehmerstationen verwendet die Basisstation BS die Strahlen BEAM 1, BEAM 2, BEAM 3 und BEAM 4. D.h. befindet sich die Mobilstation MS beispielsweise in der von dem Strahl BEAM 1 abgedeckten Bereich, können Nachrichten von der Basisstation BS an die Mobilstation MS über den Strahl BEAM 1 gesendet werden. Die Basisstation BS verwendet ein bestimmtes Muster zur Ansteuerung der Strahlen BEAM 1, BEAM 2, BEAM 3 und BEAM 4, z.B. die Reihenfolge zuerst Strahl BEAM 1, dann Strahl BEAM 2, dann Strahl BEAM 3, dann Strahl BEAM 4, anschließend wieder Strahl BEAM 1 usw. Diese Reihenfolge kann z.B. durch einen Pseudo-Zufallsalgorithmus ermittelt werden. Durch die Sprünge zwischen den Strahlen BEAM 1, BEAM 2, BEAM 3 und BEAM 4 können Teilnehmerstationen innerhalb der gesamten Funkzelle von der Basisstation BS versorgt werden. Für die Versendung von Informationen mit den verschiedenen Strahlen steht jeweils die gleiche Zeitspanne, so z.B. ein Zeitschlitz, zur Verfügung.

Um den Teilnehmerstationen das Erkennen der Zeitschlitzgrenzen zu ermöglich, sendet die Basisstation BS zur zeitlichen Synchronisierung Synchronisationsinformationen an die Teilnehmerstationen.

Neben der Versendung von Informationen in die Richtungen der Strahlen BEAM 1, BEAM 2, BEAM 3 und BEAM 4 kann die Basisstation BS Informationen auch omnidirektional ausstrahlen, d.h. mit gleicher Amplitude in alle horizontalen Richtungen. Zu bestimmten Zeiten strahlt die Basisstation BS eine Pilotsequenz per Broadcast an alle Teilnehmerstationen innerhalb der Funkzelle aus. Die Mobilstation MS verwendet die omnidirektional ausgestrahlte Pilotsequenz zur Kanalschätzung. Durch die Kanalschätzung ermittelt die Mobilstation MS den Kanalvektor $H = [h_1, h_2,...,h_M]^T$. Der Bestandteil $h_i$ des Vektors H gibt den Funkkanal zwischen der Basisstation BS und der Mobilstation MS in Bezug auf die Antenne i der Basisstation BS an.

Ein Kanalvektor H mit M Elementen liegt bei einem 1-tap-Kanal vor, d.h. bei einem Kanal, welcher von lediglich einem komplexen Wert beschrieben werden kann. Dies ist bei schmalbandigen Systemen der Fall, wenn die Systembandbreite wesentlich kleiner ist als die Kohärenzbandbreite des Kanals. Dies ist im allgemeinen gegeben, wenn die mit der Mehrwegeausbreitung verbundenen Umweglaufzeiten klein und ihre Reziprokwerte, welche proportional zur Kohärenzbandbreite sind, deutlich kleiner sind als die Systembandbreite. Das Verfahren ist jedoch auch auf nicht-1-tap-Kanäle anwendbar. Weist die Basisstation BS M Antennen auf, die Mobilstation MS eine Antenne und der Kanal L taps, so handelt es sich bei H um eine MxL Matrix.

Das von der Mobilstation MS empfangene Signal bei Verwendung des j-ten Strahls durch die Basisstation BS ergibt sich aus $y_j = H^H \cdot W_j \cdot x + n$, wobei x das von der Basisstation BS gesendete Signal und n durch die Funkübertragung hinzugefügtes weißes Gausches Rauschen (AWGN: Additive White Gaussian Noise) ist. Kann die Mobilstation MS während der Aussendung von Pilotsequenzen Signal-zu-Rausch-Verhältnisse bestimmen, und sind der Mobilstation MS die Strahlformungsvektoren $W_j$ und der Kanalvektor H bekannt, so kann sie das Signal-zu-Rausch-Verhältnis eines unter Verwendung eines bestimmten Strahls versendeten Signals rechnerisch bestimmen.

Die Versendung der Pilotsequenz zur Kanalschätzung erfolgt vorteilhafterweise periodisch, z.B. nach jedem n-ten Sprung zwischen den verschiedenen Strahlen. Verwendet die Basisstation BS beispielsweise die Sprungsequenz zuerst Strahl BEAM 1, dann Strahl BEAM 2, dann Strahl BEAM 3, dann Strahl BEAM 4, dann Strahl BEAM 1, usw., so kann die Pilotsequenz periodisch nach dem Strahl BEAM 4 ausgestrahlt werden. Die Versendung der Pilotsequenz kann auch zu nicht periodisch wiederkehrenden Zeitpunkten erfolgen, wobei diese Zeitpunkte den Teilnehmerstationen bekannt sein müssen.

Ändert sich der Funkkanal langsam gegenüber der Sprungfrequenz zwischen den verschiedenen Strahlen, kann die Mobilstation MS aufgrund der Bestimmung des Kanalvektors H vorhersagen, welche Empfangsqualität sie für die folgenden Strahlen haben wird. Verwendet die Basisstation BS beispielsweise die oben genannte Sprungsequenz, so bestimmt die Mobilstation MS den Kanalvektor vor der Aussendung des Strahls BEAM 1. Dieses Ergebnis kann für die Versendung der Strahlen BEAM 1, BEAM 2, BEAM 3 und BEAM 4 als konstant angenommen werden, so dass die Mobilstation nach der Bestimmung des Kanalvektors das Signal-zu-Rausch-Verhältnis für die vier Strahlen BEAM 1, BEAM 2, BEAM 3 und BEAM 4 berechnen kann. Dies bedeutet, dass eine Pilotsequenz nicht für jeden Strahl einzeln versendet werden muss, vielmehr genügt eine omnidirektional ausgestrahlte Pilotsequenz für eine Mehrzahl an Strahlen. Hierdurch werden im Vergleich zur Versendung einer Pilotsequenz für jeden Strahl Funkressourcen eingespart, so dass die spektrale Effizienz des Systems erhöht wird.

Figur 2 zeigt einen erfindungsgemäßen Nachrichtenaustausch zwischen der Mobilstation MS und der Basisstation BS. Zu Beginn sendet die Basisstation BS die Pilotsequenz PILOT, woraufhin die Mobilstation wie bereits beschrieben den Funkkanal schätzt. Daraufhin sendet die Mobilstation eine Rückmeldung FEEDBACK über die von ihr vorgenommene Kanalschätzung an die Basisstation BS. Die Rückmeldung FEEDBACK kann den von der Mobilstation MS ermittelten Kanalvektor angeben oder das Signal-zu-Rausch-Verhältnis für jeden Strahl. Vorzugsweise ermittelt die Mobilstation MS jedoch vor Versendung der Rückmeldung FEEDBACK den für sie am besten geeigneten Strahl und meldet diesen Strahl an die Basisstation BS durch Versendung der Rückmeldung FEEDBACK. Bei dem am besten geeigneten Strahl handelt es sich um den Strahl mit dem höchsten Wert des Signal-zu-Rausch-Verhältnisses. Es ist auch möglich, dass die Mobilstation MS der Basisstation BS nicht in jedem Fall nach erfolgter Kanalschätzung eine Rückmeldung FEEDBACK sendet, sondern nur, wenn das Signal-zu-Rausch-Verhältnis für einen oder mehrere Strahlen einen bestimmten Grenzwert überschritten hat. Dies resultiert darin, dass die Mobilstation MS bei der im folgenden beschriebenen Funkressourcenvergabe nur dann berücksichtigt wird, wenn für eine Nachrichtenübertragung unter Verwendung eines Strahls eine bestimmte Qualität zu erwarten ist. Je weniger Rückmeldung FEEDBACK die Mobilstation MS an die Basisstation BS sendet, desto weniger Funkressourcen werden hierfür in Anspruch genommen. Jedoch ist hiermit ein gesteigerter Verarbeitungsaufwand auf Seiten der Mobilstation MS verbunden, welcher -insoweit die Berechnung der Signal-zu-Rausch-Verhältnisse aus dem Kanalvektor und die Auswahl eines geeigneten Strahls betroffen sind- auch netzseitig durchgeführt werden kann.

Die Ermittlung der Kanalvektoren und entsprechend auch die Rückmeldung FEEDBACK erfolgt nach jeder Versendung der Pilotsequenz PILOT von der Basisstation BS. Die Rückmeldung FEEDBACK wird der Basisstation BS von allen Teilnehmerstationen ihrer Funkzelle gesendet oder zumindest von allen Teilnehmerstationen ihrer Funkzelle, welche Funkressourcen in Abwärtsrichtung benötigen, gegebenenfalls unter der Bedingung, dass die erwartete Empfangsqualität für zumindest einen Strahl dem Schwellenwertkriterium entspricht. Um Interferenzen zwischen den Rückmeldung FEEDBACK verschiedener Teilnehmerstationen zu vermeiden, können die Nachrichten der verschiedenen Teilnehmerstationen durch Kodes und/oder räumliche Abstrahlung separiert werden.

Die Basisstation BS oder eine mit der Basisstation BS verbundene netzseitige Einrichtung ermittelt aus den empfangenen Rückmeldungen FEEDBACK eine Zuweisung von Funkressourcen an die Teilnehmerstationen. Empfängt die Basisstation BS für einen bestimmten Strahl lediglich von einer Teilnehmerstation eine positive Rückmeldungen FEEDBACK, so wird dieser Strahl für die nächste Ausstrahlung dieser Teilnehmerstation zugewiesen. Liegt in Bezug auf einen bestimmten Strahl eine positive Rückmeldungen FEEDBACK mehrerer Teilnehmerstationen vor, so erfolgt eine Auswahl aus diesen Teilnehmerstationen, wobei z.B. berücksichtigt werden kann, welche Empfangsqualität für die jeweiligen Teilnehmerstationen zu erwarten ist und/oder wann den jeweiligen Teilnehmerstationen zuletzt Funkressourcen in Abwärtsrichtung zugewiesen wurden. Die Basisstation sendet daraufhin die Zuweisung der Funkressourcen mittels der Information ASSIGN per Broadcast an die Teilnehmerstationen. So können die Inhalte der Information ASSIGN beispielsweise lauten: Strahl 1 wird Teilnehmerstation 1 zugewiesen, Strahl 2 wird Teilnehmerstation zugewiesen, usw. Da den Teilnehmerstationen die Reihenfolge der Versendung der verschiedenen Strahlen und zusätzlich die konstante Zeitdauer der Versendung eines jeden Strahls bekannt ist, können sie ermitteln, zu welchen Zeiten sie für sie bestimmte Nachrichten von der Basisstation BS empfangen werden.

Zusätzlich sendet die Basisstation BS die Informationen HOPPING SEQUENCE per Broadcast an die Teilnehmerstationen, welche die Reihenfolge der Versendung der verschiedenen Strahlen angibt, wobei der als nächstes auszustrahlende Strahl an erster Stelle steht. Die Versendung der Sprungsequenz ist vorteilhaft für Teilnehmerstationen, welche neu in die Funkzelle der Basisstation BS hinzugekommen sind und welchen die Sprungsequenz zuvor nicht bekannt war. Überdies ist es sinnvoll über die Sprungsequenz zu informieren, wenn diese von der Basisstation BS geändert wurde, so dass die Teilnehmerstationen, welchen mit den Informationen ASSIGN eine Strahlrichtung zugewiesen wurde, bestimmen können, wann die entsprechende Strahlrichtung ausgestrahlt wird. Die Basisstation BS ist an die Sprungsequenz, welche den Teilnehmerstationen mit den Informationen ASSIGN zugewiesen wird, gebunden. Dies bedeutet, dass die Basisstation BS nicht zufällig den als nächstes auszustrahlenden Strahl bestimmen kann, vielmehr folgt sie dem den Teilnehmerstationen mitgeteilten Muster.

Die Versendung der Rückmeldungen FEEDBACK, sowie der Informationen ASSIGN und HOPPING SEQUENCE erfolgen vorzugsweise wie in Figur 2 dargestellt im Anschluss an die Versendung der Pilotsequenz PILOT, d.h. zwischen der Versendung der Strahlen. Dieser zeitliche Ablauf kann auch anders erfolgen, indem z.B. die Rückmeldungen FEEDBACK jeweils von Teilnehmerstationen eines Gebietes versendet werden, in welche ein Strahl versendet wird. So kann beispielsweise ein erster Strahl versendet werden, und im Anschluss an diese Versendung senden die Teilnehmerstationen in dem Gebiet des ersten Strahles die Rückmeldungen FEEDBACK.

Eine Änderung der Sprungsequenz ist dann sinnvoll, wenn die Basisstation nicht für alle Strahlen eine positive Rückmeldung FEEDBACK empfängt. In diesem Fall kann auf die Ausstrahlung derjenigen Strahlen, welche für keine Teilnehmerstation günstig sind, verzichtet werden. Werden beispielsweise die vier Strahlen BEAM 1, BEAM 2, BEAM 3 und BEAM 4 verwendet, und ermitteln für die drei Strahlen BEAM 1, BEAM 2 und BEAM 3 Teilnehmerstationen hohe Signal-zu-Rausch-Verhältnisse, während für den Strahl BEAM 4 für keine Teilnehmerstation ein guter Funkkanal vorhanden ist, so können die Strahlen beispielsweise in der Reihenfolge BEAM 1, BEAM 2, BEAM 3, BEAM 1, BEAM 2, usw. ausgestrahlt werden. Den Teilnehmerstationen ist bekannt, welche Strahlen in der Funkzelle grundsätzlich verwendbar sind, so dass nach jeder Kanalschätzung auch die Signal-zu-Rausch-Verhältnisse für den aktuell nicht verwendeten Strahl BEAM 4 ermittelt werden, so dass der Strahl BEAM 4 dann, wenn sich eine Teilnehmerstation in dem Bereich des Strahls BEAM 4 befindet, wieder verwendet werden kann. Dies ist vorteilhaft in Bezug auf die Mobilität von Teilnehmerstationen. Dieses flexible Vorgehen hinsichtlich der Versendung von Informationen unter Verwendung der verschiedenen grundsätzlich verwendbaren Strahlen führt zu einem sparsamen Umgang mit Funkressourcen, da Strahlen, welche zu einer guten Empfangsqualität führen, verwendet werden, während Strahlen, welche zu einer mangelhaften Empfangsqualität führen würden, nicht verwendet werden. Auch in Bezug auf die Sendeleistung der Basisstation führt das geschilderte flexible Vorgehen zu Einsparungen, da bei Verwendung eines ungünstigen Strahls die Sendeleistung der Basisstation hoch eingestellt werden müsste, um eine akzeptable Empfangsqualität bei der jeweiligen Teilnehmerstation zu erreichen. Eine Änderung der Sprungsequenz ist umso wahrscheinlicher, je weniger Teilnehmerstationen sich in der Funkzelle befinden. Dies bedeutet, dass das erfindungsgemäße Vorgehen bei beliebigen Anzahlen von Teilnehmerstationen, und insbesondere bei niedrigen Teilnehmerstationsdichten von Vorteil ist.

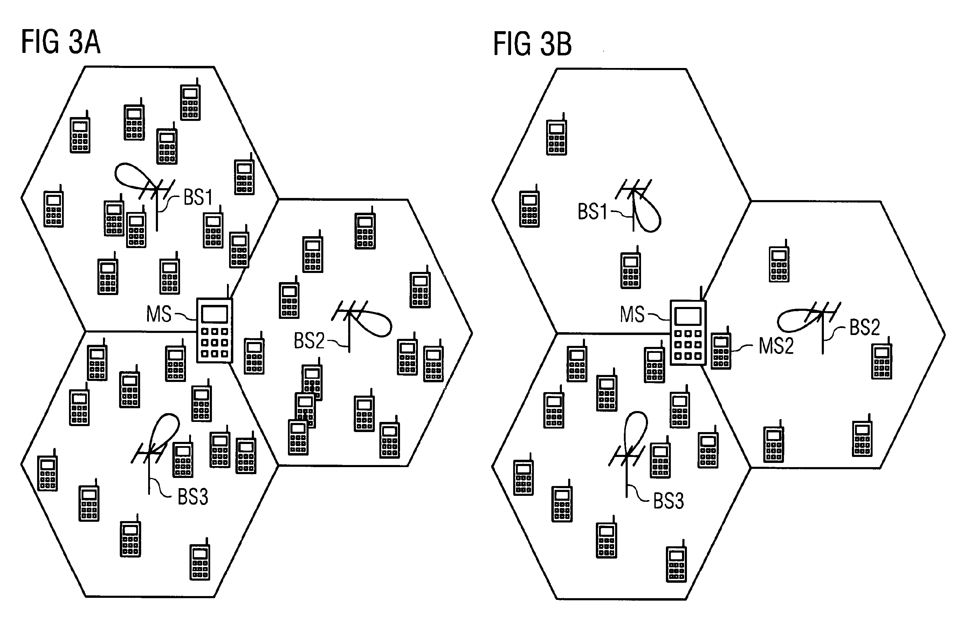

Umfasst das Funkkommunikationssystem mehrere Funkzellen, ist es vorteilhaft, die Sprungsequenzen benachbarter Zellen so zu bestimmen, dass sie orthogonal zueinander sind, d.h. dass Strahlen benachbarter Zellen zu keinem Zeitpunkt aufeinander zeigen. Eine derartige Situation ist in Figur 3a dargestellt, welche einen aus drei Funkzellen bestehenden Ausschnitt aus einem Funkkommunikationssystem darstellt. Die Funkzellen werden durch die Basisstationen BS1, BS2 und BS3 versorgt. In jeder der Funkzellen befinden sich eine Mehrzahl von Teilnehmerstationen. Die Mobilstation MS befindet sich in der Mitte in der Nähe des Schnittpunktes der drei Zellen, so dass sie Signale von jeder der drei Basisstationen BS1, BS2 und BS3 empfangen kann. Für jede der Basisstationen BS1, BS2 und BS3 ist schematisch der aktuell von ihr verwendete Strahl dargestellt. Die Strahlen der verschiedenen Basisstationen BS1, BS2 und BS3 interferieren gemäß Figur 3a nicht miteinander, d.h. Teilnehmerstationen, welche aktuell den Strahl der Basisstation BS1 empfangen, werden nicht durch die Strahlen der Basisstationen BS2 und BS3 gestört und umgekehrt. So kann beispielsweise die Mobilstation MS Nachrichten von der Basisstation BS3 empfangen ohne gleichzeitig Signale von den Basisstationen BS1 und BS2 zu empfangen, da die Strahlen der Basisstationen BS1 und BS2 nicht auf die Mobilstation MS zeigen.

Figur 3b zeigt eine Situation, in welcher die Sprungsequenzen der Basisstationen BS1, BS2 und BS3 nicht orthogonal sind. So zeigen zu dem in Figur 3b dargestellten Zeitpunkt die Strahlen der drei Basisstationen BS1, BS2 und BS3 gleichzeitig auf die Mobilstation MS. Empfängt die Mobilstation MS zu diesem Zeitpunkt eine Nachricht von der Basisstation BS1, so wird diese durch die Strahlen der Basisstationen BS2 und BS3 gestört. '

Findet lediglich selten eine Änderung der Sprungsequenz einer der Basisstationen BS1, BS2 und BS3 statt, so können die Sprungsequenzen der Basisstationen BS1, BS2 und BS3 synchronisiert bleiben, indem die jeweils anderen Basisstationen BS1, BS2 und BS3 sich der Änderung anpassen. Auf diese Weise kann dauerhaft die Orthogonalität zwischen den Sprungsequenzen der verschiedenen Zellen aufrecht erhalten werden. Dieses Vorgehen eignet sich besonders bei hohen Teilnehmerstationsdichten.

Weiterhin ist es möglich, dass Teilnehmerstationen, welche sich im Grenzgebiet zwischen mehreren Funkzellen befinden, die Broadcast-Informationen der benachbarten Basisstationen empfangen und dekodieren. Auf diese Weise kann eine Teilnehmerstation die von einer benachbarten Basisstation gesendete Pilotsequenz auswerten und somit den Funkkanal zwischen der benachbarten Basisstation und der Teilnehmerstation schätzen, so dass der Teilnehmerstation die durch Nachbarzellen erzeugte Interferenz (cochannel interference) bekannt ist. Weiterhin kann die Teilnehmerstation den von der benachbarten Basisstation ausgestrahlten Informationen die von der benachbarten Basisstation verwendete Sprungsequenz entnehmen.

Bei einer Mehrzahl von Funkzellen können Teilnehmerstationen, welche Signale sowohl von der eigenen als auch von einer benachbarten Basisstation empfangen, sowohl die Funkausbreitungsbedingungen in Kombination mit der Sprungsequenz der eigenen Funkzelle als auch die Funkausbreitungsbedingungen in Kombination mit der Sprungsequenz der benachbarten Zelle ermitteln und berücksichtigen. Stellt beispielsweise eine Teilnehmerstation fest, dass in Bezug auf einen ersten Strahl ihrer Basisstation ein hohes Signal-zu-Rausch-Verhältnis vorliegt, jedoch dieser Strahl gleichzeitig zu einem Strahl einer benachbarten Basisstation ausgestrahlt wird, in Bezug auf welchen auch ein hohes Signal-zu-Rausch-Verhältnis vorliegt, so sollte sie der Basisstation nicht diesen ersten Strahl als geeigneten Strahl mitteilen. Sendet die Teilnehmerstation ihrer Basisstation die von ihr ermittelten Werte für das Signal-zu-Rausch-Verhältnis für einen oder mehrere Strahlen ihrer Basisstation, so kann dieses Signal-zu-Rausch-Verhältnis durch das Signal-zu-Rausch-Verhältnis des jeweils gleichzeitig von einer benachbarten Basisstation ausgestrahlten Strahls korrigiert werden, so dass der Basisstation das effiziente Signal-zu-Rausch-Verhältnis mitgeteilt wird. Die Berücksichtigung der benachbarten Funkzellen kann auch durch die Basisstation erfolgen, indem die Teilnehmerstation den Funkkanal zwischen der benachbarten Basisstation und der Teilnehmerstation schätzt und dieses Ergebnis an die eigene Basisstation weiterleitet.

Die in Figur 3b dargestellte Situation, gemäß welcher die Mobilstation MS z.B. Nachrichten von der Basisstation BS3 empfängt und gleichzeitig von dem Strahl der Basisstation BS2 gestört wird, kann nur dann auftreten, wenn eine Teilnehmerstation in der Funkzelle der Basisstation BS2 sich in dem Bereich des in Figur 3b dargestellten Strahls der Basisstation BS2 befindet und aktuell Nachrichten von der Basisstation BS2 empfängt. Hierbei kann es sich z.B. um die Mobilstation MS2 handeln. Wäre dies nicht der Fall, würde die Basisstation BS2 aktuell nicht den dargestellten Strahl verwenden. Um die für die beiden Mobilstationen MS und MS2 ungünstige Interferenz-Situation zu vermeiden ist es möglich, der Mobilstation MS2 keine Funkressourcen des dargestellten Strahls zuzuweisen, und eine Nachricht, welche zu der Mobilstation MS zu versenden ist, gleichzeitig sowohl über die Basisstation BS3 als auch über die Basisstation BS2 auszustrahlen.

Dies kann folgendermaßen realisiert werden: Wenn die Mobilstation MS feststellt, dass sie eine ungünstige Interferenzsituation erfahren wird, da gleichzeitig Strahlen der Basisstationen BS2 und BS3 mit jeweils gutem Signal-zu-Rausch-Verhältnis die Mobilstation MS erreichen werden, d.h. wenn die Orthogonalität der Sprungsequenzen der beiden benachbarten Basisstationen BS2 und BS3 stark gestört ist, sendet die Mobilstation MS eine Aufforderung an die zu ihrer Basisstation BS3 benachbarte Basisstation BS2. Mit dieser Aufforderung wird die benachbarte Basisstation BS2 angewiesen, gleichzeitig zur Versendung der Nachricht durch die Basisstation BS3 die Nachricht an die Mobilstation MS zu versenden. Alternativ kann die Aufforderung auch an die Basisstation BS3 gesendet werden. Auf diese Weise kann die Mobilstation MS mit mehreren Basisstationen gleichzeitig kommunizieren, entsprechend dem bekannten Soft-Handover-Verfahren. Die Mobilstation MS erfährt durch den gleichzeitigen Nachrichtenempfang von den beiden Basisstationen BS2 und BS3 eine gesteigerte Empfangsqualität. Ist der Funkkanal zwischen der Basisstation BS2 und der Mobilstation MS einerseits und zwischen der Basisstation BS3 und der Mobilstation MS andererseits netzseitig bekannt, so kann zur Erhöhung der Qualität der Nachrichtenübertragung senderseitig, d.h. von den Basisstationen BS2 und BS3, ein maximum-ratio-combining-Verfahren angewandt werden.

Der durch das beschriebene Vorgehen benachteiligten Mobilstation MS2 werden orthogonale Funkressourcen zugewiesen, wie z.B. ein späterer Zeitschlitz, während welchem der in Figur 3b dargestellte Strahl ausgestrahlt wird, oder eine andere Funkfrequenz der Ausstrahlung des dargestellten Strahls. Sind netzseitig die Funkkanäle zwischen der Basisstation BS2 und der Mobilstation MS, zwischen der Basisstation BS3 und der Mobilstation MS, zwischen der Basisstation BS2 und der Mobilstation MS2, und zwischen der Basisstation BS3 und der Mobilstation MS2 bekannt, so kann senderseitig ein jointtransmission-Verfahren angewandt werden. Hierbei werden die Signale für die beiden Mobilstationen MS und MS2 derart vorverzerrt, dass die die Mobilstationen MS und MS2 im wesentlichen die jeweils für sie bestimmte Nachricht empfangen. Die von den Basisstationen BS3 und BS2 ausgestrahlten Signale werden durch den Funkkanal derart entzerrt, dass sich die für die Mobilstation MS bestimmten Signalanteile der entzerrten Signale der Basisstation BS3 und der entzerrten Signale der Basisstation BS2 am Ort der Mobilstation MS konstruktiv überlagern und die Signalanteile, welche für die Mobilstation MS2 bestimmt sind, sich am Ort der Mobilstation MS gegenseitig auslöschen. Umgekehrtes gilt in Bezug auf die Mobilstation MS2.

Die in Figur 3b dargestellte Situation eignet sich auch für die Durchführung eines Soft-Handovers der Mobilstation MS zwischen beispielsweise der Basisstation BS3 und der Basisstation BS2. Während im Fall orthogonaler Sprungfrequenzen benachbarter Basisstationen ein Hard-Handover durchgeführt werden muss, kann das Vorliegen von nicht-orthogonalen Sprungfrequenzen für ein Soft-Handover verwendet werden, bei welchem die Mobilstation MS wie oben beschrieben gleichzeitig Signale von den beiden am Handover beteiligten Basisstationen empfängt.

Während die Erfindung in Bezug auf den Fall, dass eine Mobilstation lediglich eine omnidirektionale Sende- und Empfangsantenne aufweist, beschrieben wurde, kann sie auch auf den Fall mehrerer Antennen auf Seiten der Mobilstation angewandt werden. Weist die Basisstation M Antennen und die Mobilstation N Antennen auf, so wird durch die Kanalschätzung der Mobilstation eine Matrix H der Dimension MxN bestimmt.

**Patentansprüche**

1. Verfahren zur Kommunikation in einem Funkkommunikationssystem, welches zumindest eine Basisstation (BS, BS1, BS2, BS3) und Teilnehmerstationen (MS, MS2) umfasst, bei dem
die Basisstation (BS, BS1, BS2, BS3) zur Nachrichtenversendung an Teilnehmerstationen (MS, MS2) nacheinander verschiedene Abstrahlrichtungen (BEAM 1, BEAM 2, BEAM 3, BEAM 4) verwendet, **dadurch gekennzeichnet,**
**dass** die Basisstation (BS, BS1, BS2, BS3) Informationen (HOPPING SEQUENCE) über die Reihenfolge der Verwendung der Abstrahlrichtungen (BEAM 1, BEAM 2, BEAM 3, BEAM 4) an Teilnehmerstationen (MS, MS2) versendet.

2. Verfahren nach Anspruch 1, bei dem
die Basisstation (BS, BS1, BS2, BS3) ein Pilotsignal (PILOT) zur teilnehmerstationsseitigen Kanalschätzung omnidirektional versendet.

3. Verfahren nach Anspruch 2, bei dem
die Basisstation (BS, BS1, BS2, BS3) nach der Versendung des Pilotsignals (PILOT) Informationen (FEEDBACK) über eine teilnehmerseitige Empfangsqualität betreffend eine Mehrzahl der Abstrahlrichtungen (BEAM 1, BEAM 2, BEAM 3, BEAM 4) von mindestens einer Teilnehmerstation (MS, MS2) empfängt.

4. Verfahren nach Anspruch 3, bei dem
die Informationen (FEEDBACK) über die teilnehmerseitige Empfangsqualität ermittelt werden aus einer teilnehmerstationsseitigen Kanalschätzung unter Verwendung des omnidirektional versendeten Pilotsignals (PILOT) und aus Informationen über zumindest manche der Abstrahlrichtungen (BEAM 1, BEAM 2, BEAM 3, BEAM 4).

5. Verfahren nach Anspruch 3 oder 4, bei dem
die Basisstation (BS, BS1, BS2, BS3) aufgrund der empfangenen Informationen (FEEDBACK) über die Empfangsqualität Funkressourcen einer Abstrahlrichtung (BEAM 1, BEAM 2, BEAM 3, BEAM 4) an eine Teilnehmerstation (MS, MS2) zuweist.

6. Verfahren nach einem der Ansprüche 3 bis 5, bei dem
die Basisstation (BS, BS1, BS2, BS3) aufgrund der empfangenen Informationen (FEEDBACK) über die Empfangsqualität die Reihenfolge der Verwendung der Abstrahlrichtungen (BEAM 1, BEAM 2, BEAM 3, BEAM 4) ändert und Informationen (HOPPING SEQUENCE) über die geänderte Reihenfolge versendet.

7. Verfahren nach Anspruch 6, bei dem
die Änderung der Reihenfolge ein Auslassen von zumindest einer Abstrahlrichtung (BEAM 1, BEAM 2, BEAM 3, BEAM 4) umfasst.

8. Verfahren nach einem der Ansprüche 1 bis 7, bei dem
eine weitere Basisstation (BS, BS1, BS2, BS3) zur Nachrichtenversendung an Teilnehmerstationen (MS, MS2) nacheinander verschiedene Abstrahlrichtungen (BEAM 1, BEAM 2, BEAM 3, BEAM 4) verwendet, wobei die Reihenfolge der Verwendung der Abstrahlrichtungen (BEAM 1, BEAM 2, BEAM 3, BEAM 4) der Basisstation (BS, BS1, BS2, BS3) und die Reihenfolge der Verwendung der Abstrahlrichtungen (BEAM 1, BEAM 2, BEAM 3, BEAM 4) der weiteren Basisstation (BS, BS1, BS2, BS3) aufeinander abgestimmt werden.

9. Verfahren nach einem der Ansprüche 2 bis 8, bei dem erste Informationen ermittelt werden über eine teilnehmerseitige Empfangsqualität aus einer Kanalschätzung einer Teilnehmerstation (MS, MS2) unter Verwendung des omnidirektional versendeten Pilotsignals (PILOT) der Basisstation (BS, BS1, BS2, BS3) und aus Informationen über zumindest manche der Abstrahlrichtungen (BEAM 1, BEAM 2, BEAM 3, BEAM 4) der Basisstation (BS, BS1, BS2, BS3), und zweite Informationen ermittelt werden über eine teilnehmerseitige Empfangsqualität aus einer Kanalschätzung der Teilnehmerstation (MS, MS2) unter Verwendung eines omnidirektional versendeten Pilotsignals (PILOT) der weiteren Basisstation (BS, BS1, BS2, BS3) und aus Informationen über zumindest manche der Abstrahlrichtungen (BEAM 1, BEAM 2, BEAM 3, BEAM 4) der weiteren Basisstation (BS, BS1, BS2, BS3), und die ersten und die zweiten Informationen bei einer Zuweisung von Funkressourcen an die Teilnehmerstation (MS, MS2) berücksichtigt werden.

10. Verfahren nach einem der Ansprüche 2 bis 9, bei dem

eine weitere Basisstation (BS, BS1, BS2, BS3) zur Nachrichtenversendung an Teilnehmerstationen (MS, MS2) nacheinander verschiedene Abstrahlrichtungen (BEAM 1, BEAM 2, BEAM 3, BEAM 4) verwendet, und
die Basisstation (BS, BS1, BS2, BS3) und die weitere Basisstation (BS, BS1, BS2, BS3) gleichzeitig die gleiche Nachricht an eine Teilnehmerstation (MS, MS2) unter Verwendung von jeweils einer Abstrahlrichtung (BEAM 1, BEAM 2, BEAM 3, BEAM 4) senden.

11. Basisstation (BS, BS1, BS2, BS3) für ein Funkkommunikationssystem,
mit Mitteln zum Versenden von Nachrichten an Teilnehmerstationen (MS, MS2) unter Verwendung von verschiedenen Abstrahlrichtungen (BEAM 1, BEAM 2, BEAM 3, BEAM 4) nacheinander,
**gekennzeichnet durch**
Mittel zum Versenden von Informationen (HOPPING SEQUENCE) über die Reihenfolge der Verwendung der Abstrahlrichtungen (BEAM 1, BEAM 2, BEAM 3, BEAM 4) an Teilnehmerstationen (MS, MS2).

12. Teilnehmerstation (MS, MS2) für ein Funkkommunikationssystem, in welchem eine Basisstation (BS, BS1, BS2, BS3) zur Nachrichtenversendung an Teilnehmerstationen (MS, MS2) nacheinander verschiedene Abstrahlrichtungen (BEAM 1, BEAM 2, BEAM 3, BEAM 4) verwendet,
**gekennzeichnet durch**
Mittel zum Empfangen und Verarbeiten von Informationen (HOPPING SEQUENCE) über die Reihenfolge der Verwendung der Abstrahlrichtungen (BEAM 1, BEAM 2, BEAM 3, BEAM 4) von der Basisstation (BS, BS1, BS2, BS3).

13. Teilnehmerstation (MS, MS2) nach Anspruch 12, mit Mitteln zum Durchführen einer Kanalschätzung unter Verwendung eines von der Basisstation (BS, BS1, BS2, BS3) omnidirektional versendeten Pilotsignals (PILOT), und Mitteln zum Ermitteln von Informationen (FEEDBACK) über eine teilnehmerseitige Empfangsqualität aus der Kanalschätzung und aus Informationen über zumindest manche der Abstrahlrichtungen (BEAM 1, BEAM 2, BEAM 3, BEAM 4).

# FIG 1

BEAM 1

BEAM 2

BS

MS

BEAM 4

BEAM 3

# FIG 2

| PILOT | FEEDBACK | ASSIGN HOPPING SEQUENCE |
|-------|----------|-------------------------|

BS→MS    MS→BS    BS→MS

FIG 3A

FIG 3B

EP 1 722 583 A1

**Europäisches Patentamt**

## EUROPÄISCHER RECHERCHENBERICHT

Nummer der Anmeldung

EP 05 01 0259

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 141 335 A (KUWAHARA ET AL) 31. Oktober 2000 (2000-10-31) * Spalte 2, Zeile 44 - Spalte 3, Zeile 11 * * Spalte 4, Zeile 16 - Spalte 5, Zeile 17 * * Spalte 10, Zeile 42 - Zeile 50 * ----- | 1-13 | H04Q7/36 |
| X | EP 1 365 610 A (NTT DOCOMO, INC) 26. November 2003 (2003-11-26) * Absatz [0002] * * Absatz [0022] - Absatz [0023] * * Absatz [0019] * * Absatz [0037] * * Absatz [0047] - Absatz [0050] * * Absatz [0053] - Absatz [0055] * ----- | 1,11,12 | |
| A | US 6 671 499 B1 (YLITALO JUHA ET AL) 30. Dezember 2003 (2003-12-30) * Spalte 3, Zeile 1 - Zeile 15 * * Spalte 3, Zeile 50 - Zeile 67 * * Spalte 5, Zeile 1 - Zeile 20 * * Spalte 7, Zeile 59 - Zeile 26 * ----- | 1-13 | **RECHERCHIERTE SACHGEBIETE (Int.Cl.7)** H04Q H04B |
| A | HU HONGLIN ET AL: "Performance evaluation of beam hopping communications scheme" PERSONAL, INDOOR AND MOBILE RADIO COMMUNICATIONS, 2003. PIMRC 2003. 14TH IEEE PROCEEDINGS ON SEPT. 7-10, 2003, PISCATAWAY, NJ, USA,IEEE, Bd. 2, 7. September 2003 (2003-09-07), Seiten 2470-2474, XP010678075 ISBN: 0-7803-7822-9 * Absatz [0002]; Abbildungen 1,2 * ----- | 1-13 | |

Der vorliegende Recherchenbericht wurde für alle Patentansprüche erstellt

| Recherchenort | Abschlußdatum der Recherche | Prüfer |
|---|---|---|
| Berlin | 19. Oktober 2005 | Rothlübbers, C |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 01 0259

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-10-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 6141335 | A | 31-10-2000 | CN | 1189068 A | 29-07-1998 |
| | | | JP | 3308835 B2 | 29-07-2002 |
| | | | JP | 10173585 A | 26-06-1998 |
| EP 1365610 | A | 26-11-2003 | CN | 1461119 A | 10-12-2003 |
| | | | JP | 2003347992 A | 05-12-2003 |
| | | | US | 2003220127 A1 | 27-11-2003 |
| US 6671499 | B1 | 30-12-2003 | AU | 9544198 A | 26-07-1999 |
| | | | CN | 1285979 A | 28-02-2001 |
| | | | EP | 1053601 A1 | 22-11-2000 |
| | | | FI | 980035 A | 10-07-1999 |
| | | | WO | 9935764 A1 | 15-07-1999 |
| | | | NO | 20003512 A | 07-09-2000 |

EPO FORM P0461

Für nähere Einzelheiten zu diesem Anhang : siehe Amtsblatt des Europäischen Patentamts, Nr.12/82